(19) Europäisches Patentamt
European Patent Office
Office européen des brevets

(11) EP 1 462 472 A1

(12) **EUROPEAN PATENT APPLICATION**

(43) Date of publication:
**29.09.2004 Bulletin 2004/40**

(51) Int Cl.[7]: **C08J 3/00**, C08F 8/14, C09D 5/16

(21) Application number: **03251912.6**

(22) Date of filing: **26.03.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **Sigma Kalon Services B.V.**
**1422 AD Uithoorn (NL)**

(72) Inventor: **The designation of the inventor has not yet been filed**

(74) Representative: **Walsh, David Patrick**
**Appleyard Lees,**
**15 Clare Road**
**Halifax HX1 2HY (GB)**

(54) **A process for the protection of acid groups in polymers**

(57) A process for the protection of acid group containing side chains and/or terminal acid groups on polymers by reaction of at least one polymer acid group of formula (I)

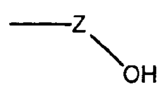
(I)

wherein z represents

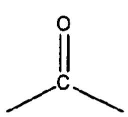
,
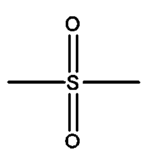
,
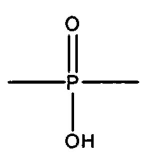
or
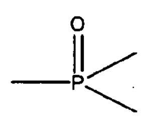
;

with a monoacyloxysilyl compound of formula (II)

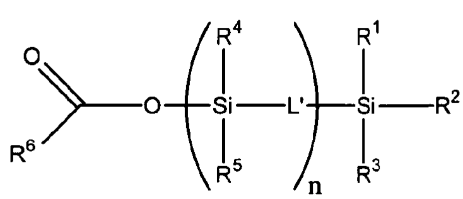
(II)

while removing the formed acid group of formula (IV)

EP 1 462 472 A1

$$R^6C(O)OH \qquad (IV)$$

from the system to produce at least one protected acid group of formula (III)

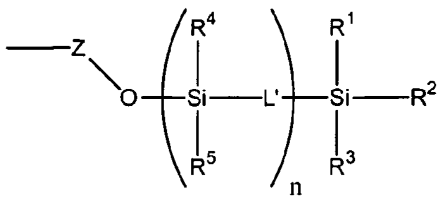

(III)

## Description

The invention relates to a new method for the protection of acid groups in polymers, in particular, but not exclusively preparation of organosilylated carboxylate polymers, such as trihydrocarbyl silyl carboxylate polymers. In another aspect, the invention relates to the use of such polymers in applications where the hydrolysable silyl ester groups are advantageous. One such application is as a resin or co-resin for self-polishing antifouling paints.

## Background

Antifouling paints are used to prevent and delay the fouling of underwater structures (e.g. ships' bottom, docks, fishnets, and buoys) by various marine organisms such as shells, seaweed, and aquatic bacteria. When such marine organisms adhere and propagate on an underwater structure like the bottom of a ship, the surface roughness of the whole ship may be increased to induce decrease of velocity of the ship or increase of fuel consumption. Further, removal of such aquatic organisms from the ship's bottom needs much labour and a long period of working time. In addition, if these organisms adhere and propagate on an underwater structure such as a steel structure they deteriorate their anticorrosive coating films leading to a reducing of the lifetime of the underwater structure. A solution for the prevention of fouling is the use of self-polishing paints based on polymers which become soluble in sea water after hydrolysis.

Underwater structures are therefore often coated with antifouling paint employing polymers containing various hydrolysable groups and more specifically organosilyl groups.

All the silyl polymers used for antifouling paints and described in the patent literature (such as EP 0297505, JP 10245451 A, WO 8402915, JP 63215780 A, EP 131626, US 4593055, US 4594365, JP 63118381 A, EP 0775733, WO 9638508, JP 11116257 A, EP 802243, EP 0714957, JP 07018216 A, JP 01132668 A, JP 05077712 A, JP 01146969 A and US 4957989 and hereby incorporated by reference.) are produced from silylated monomers.

Several processes are known as conventional techniques for the synthesis of said silylated monomers; they have been reviewed recently in EP 1 273 589 (AtoFina) and a more recent description of such syntheses is given in US 6 498 284 B2 (Shin-Etsu).

Many of the techniques for making hydrocarbyl silyl carboxylate monomers introduce problems of impurities such as residual catalysts and side products into the final products. Impurities can be removed by purification steps carried out prior to polymerisation of the monomer but such steps increase the expense of the process.

For instance, the synthesis of trimethylsilyl methacrylate from methacrylic acid and hexamethyldisilazane is described in A.Chapman & A.D.Jenkins J.Polym.Sci. Polym.Chem.Edn. vol 15, p.3075 (1977). The reaction with hexamethyldisilazane progresses often via a phase with a lot of insoluble matter and yields high volumes of the reactive ammonia gas. Both are big disadvantages for production at industrial scale.

$$2\ R1\text{-}C(O)\text{-}OH + H\text{-}N\text{-}[SiMe_3]_2 \rightarrow \text{insoluble intermediate stage}$$

$$\rightarrow 2\ R1\text{-}C\ (O)\ \text{-}O\text{-}SiMe_3 + NH_3\uparrow$$

JP 5306290 A describes a process to obtain a methacrylic functional group-containing organosilicon compound. The process comprises reacting methacrylic acid with a halogenoalkylsilane (e.g. trialkylsilylchloride) in the presence of a tertiary amine compound having a cyclic structure. This process has disadvantages such as the reduced availability and storage stability of the silyl chloride. Moreover, the reaction yields as a by-product a hydrogen halide (which provokes the corrosion of the production equipment) or a halide salt (which has to be removed by filtration).

JP 10195084 A discloses the reaction of unsaturated carboxylic acid such as acrylic acid or methacrylic acid with a trialkylsilylhydride compound in the presence of a copper catalyst. One of the disadvantages of this method is the risk of hydrogenation of the unsaturated carboxylic acid due to a side reaction of the produced $H_2$ on the carbon-carbon double bond.

Trialkylsilylcarboxylates of aliphatic carboxylic acids can be obtained by transesterification. H.H.Anderson et al. describe in J.Org.Chem 1716 (1953) the reactions of tri-ethyl silyl acetates and diethyl silyldiacetates with halogenated propionic acids and in J.Org. Chem. 1296 (1954) the reactions of dimethyl silyl di(trifluoroacetate) or dimethyl silyl dipropionate with chloroacetic acid; they distil the acetic, propionic or trifluoroacetic acid under reduced pressure.

Russian chemists (Izv.Akad.Nauk.Ussr.Ser.Khim. 968 (1957)) run similar reactions at much higher temperatures (190-210°C) .

JP 95070152 A discloses reactions of trialkylsilylacetates with C6 to C30 carboxylic acids (e.g. palmitic, myristic, benzoic,...) ; the acetic acid is distilled under reduced pressure or azeotropically with hexane.

S.Kozuka et al. in Bull.Chem.Soc.Jap. 52 (7) 1950 (1979) study the kinetics of acyloxy exchange reaction between acyloxysilanes and carboxylic acids. The rate of the reaction has been found to proceed faster with a stronger

attacking acid and a more basic leaving acyloxy group.

EP 0342276 (Nippon Paint Co Ltd) discloses the production of metal salts of acid group containing base resins. The salts must be polyorganic salt types and undergo a transesterification of the metal ester groups with a high boiling acid to produce the metal high boiling carboxylate salt of the polymer.

It is one of the objects of the present invention to provide a process for the protection of terminal or side chain acid groups on polymers.

According to a first aspect of the present invention there is provided a process for the protection of acid group containing side chains and/or terminal acid groups on polymers by reaction of at least one polymer acid group of formula (I)

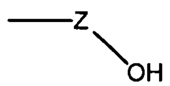 (I)

wherein z represent

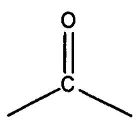 , 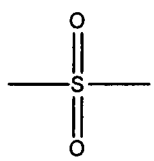 , 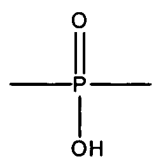 or 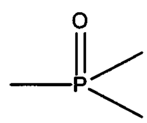 ;

with a monoacyloxysilyl compound of formula (II)

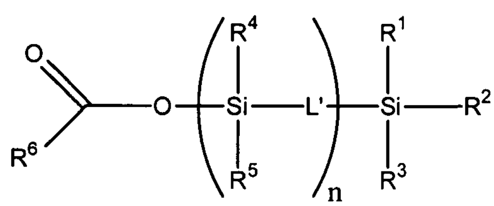 (II)

wherein $R^1$, $R^2$, $R^3$, $R^4$, $R^5$ each independently represent hydrogen, hydroxyl, alkyl, alkenyl, alkynyl, aryl or aralkyl radical optionally substituted, in the case of the hydrocarbyl radicals, by one or more substituents independently selected from the group comprising alkyl, alkoxyl, aralkyl, aralkyloxyl, aryl, aryloxyl, hydroxyl, halogen, amino or amino alkyl radicals; $R^4$ and $R^5$ may also independently represent -L'-$(SiR^4R^5L')_n$-$SiR^1R^2R^3$, wherein $R^1$, $R^2$, $R^3$, $R^4$ and $R^5$ are as defined above;

L' represents O, S, or $NR^7$, where $R^7$ is defined as $R^6$ below;

n represents a number of dihydrocarbylsiloxane units from 0 to 1000; and $R^6$ is an hydrogen atom, an alkyl, aralkyl or aryl, alkenyl or alkynyl group optionally substituted, in the case of the hydrocarbyl radicals, with one or more substituents selected from the equivalent substituents as detailed for $R^1$-$R^5$ above;

while removing the formed acid group of formula (IV)

$$R^6C(O)OH$$

from the system to produce at least one protected acid group of formula (III)

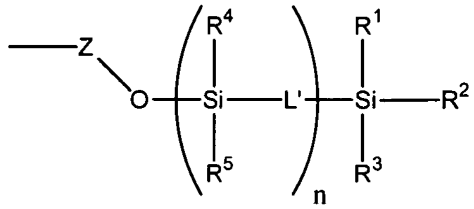

(III)

wherein Z, $R^1$, $R^2$, $R^3$, $R^4$, $R^5$, L' and n are defined above.

The polymer which may be represented as $P^1$ is a polymer having the indicated acid containing side chain or terminal group, preferably a plurality of such side chains branching at intervals along the length thereof and/or terminating the polymer chain.

Preferably, $P^1$ is a polymer having more than 30 carbons in the polymer chain, more preferably, more than 50 carbons in the polymer chain, most preferably, more than 80 carbons in the polymer chain. Preferably, the number of carbons in the chain is calculated from the weight and/or number average molecular weight of the polymer chain.

Preferably, the reaction is carried out in a suitable solvent.

Suitable solvents which can be used in the process of the invention include non polar inert solvents, cyclic and non-cyclic aliphatic hydrocarbons, aromatic hydrocarbons, cyclic and non cyclic ethers, esters, alcohols and the like, or the produced volatile acid (IV).

Suitable solvents may be independently selected from pentane, cyclopentane, hexane, heptane, cyclohexane, toluene, xylene, benzene, mesitylene, ethylbenzene, octane, decane, decahydronaphthalene, diethyl ether, diisopropyl ether, diisobutyl ether, n-butanol, propyl alcohol and the like or mixtures thereof.

Especially preferred solvents are those which allow reactive distillation ie. which cause no distillation of any of the reactants but which allow preferential distillation of the produced volatile acid (IV) to drive the equilibrium to the right ie. to the production of the silylated polymer.

More especially preferred solvents are those which form a low boiling azeotrope with distilled $R^6$-C(O)OH.

Most preferably, the solvents are independently selected from pentane, hexane, heptane, cyclohexane, toluene and xylene.

Preferably, the temperature of the reaction depends on the boiling point of the azeotrope that has to be distilled, the shape of the reactor and the height of the distillation column.

Typically, the reaction is carried out in the range 0°C - 200°C, more preferably, 60-170°C, most preferably, 110-140°C.

Preferably, the molar ratio of silylester:acid groups on the polymer at the start of the reaction is between 1: 100 and 100:1, more preferably between 10:1 and 1:10, most preferably, between 2:1 and 1:2. Preferably, the molar ratio of silylester:acid groups is approximately 1:1.

Preferably, the solvent is at least 10 wt% of the total reaction mix at the start of the reaction, more preferably, at least 20 wt%, most preferably, at least 30 wt%. The reaction may be carried out at atmospheric pressure although both higher and lower pressures are also possible.

Suitable ranges of solvent are 1-99wt% of the total reaction mix, more preferably, 20-50 wt%, most preferably 30-40wt%.

Preferably, $R^4$ and $R^5$ each independently represent an alkyl, an alkoxyl, an aryl, an hydroxyl group or an -L'-($SiR^4R^5L'$ )$_n$-$SiR^1R^2R^3$ group, wherein L', $R_1$, $R_2$, $R_4$ and $R_S$ are as defined above and wherein preferably, n=0-100 and more preferably, n=0-10, most preferably n=0 but is also possibly 1, 2, 3, 4 or 5, preferably 1.

More preferably, $R^4$ and $R^5$ in formula (III) are each independently selected from the group comprising an alkyl group, an hydroxyl group, an alkoxyl group or an -L'- ($SiR^4R^5L'$ ) $_n$-$SiR^1R^2R^3$ group, wherein L', $R^1$, $R^2$, $R^3$, $R^4$ and $R^5$ are as defined above. Most preferably, $R^1$, $R^2$, $R^3$ $R^4$ and $R^5$ each independently represent an alkyl group. The said alkyl groups may be branched or linear.

Preferably L' represents O.

Preferably, $R^1$, $R^2$, $R^3$, $R^4$, $R^5$ and $R^6$ each independently represent an hydrogen atom, an alkyl or an aryl group.

More preferably, $R^1$, $R^2$, $R^3$, $R^4$, $R^5$ and $R^6$ each independently represent an alkyl group.

According to an embodiment of the present invention, $R^1$, $R^2$, $R^3$, $R^4$, $R^5$ and $R^6$ are each independently selected from the group comprising methyl, ethyl, propyl, isopropyl, isobutyl, n-butyl, sec-butyl, t-butyl. Preferably, when they are alkyl groups, $R^1$, $R^2$, $R^3$, $R^4$, $R^5$ and $R^6$ are methyl.

When $R^1$, $R^2$ and $R^3$ are alkyl groups they are preferably, independently selected from the group consisting of C1 to C8 alkyl groups, preferably C1 to C4, more preferably methyl, ethyl, isopropyl and n-butyl. The said alkyl

groups may be branched or linear.

Preferably, when $R^4$ or $R^5$ is selected as $-L'-(SiR^4R^5L')_n-SiR^1R^2R^3-$, the $R^9$ and $R^5$ groups attached to the silicon radical in the selected group are not themselves, $-L'-(SiR^9R^5L')_n-SiR^1R^2R^3$.

Preferably, n as used herein each independently represent 0 to 500, more preferably, 1 to 100, most preferably 4 to 50. Especially preferred values for n is selected from 0, 1, 2, 3, 4 or 5.

As used herein, the term "polymer" refers to the product of a polymerisation reaction, and is inclusive of homopolymers, copolymers, terpolymers, etc.

As used herein, the term "copolymer" refers to polymers formed by the polymerisation reaction of at least two different monomers.

As used herein, the term "independently selected" or "independently represent" indicates that the each radical R or other parameter so described, can be identical or different. For example, each $R^4$ in compound of formula (I) may be different for each value of n.

The term "alkyl", as used herein, relates to saturated hydrocarbon radicals having straight, branched, polycyclic or cyclic moieties or combinations thereof and contains 1 to 20 carbon atoms, preferably 1 to 10 carbon atoms, more preferably 1 to 8 carbon atoms, still more preferably 1 to 6 carbon atoms, yet more preferably 1 to 4 carbon atoms. Examples of such radicals include may be independently selected from methyl, ethyl, n-propyl, isopropyl n-butyl, isobutyl, set-butyl, tert-butyl, 2-methylbutyl, pentyl, iso-amyl, hexyl, cyclohexyl, 3-methylpentyl, octyl and the like.

The term "alkenyl", as used herein, relates to hydrocarbon radicals having one or several double bonds, having straight, branched, polycyclic or cyclic moieties or combinations thereof and containing from 2 to 18 carbon atoms, preferably 2 to 10 carbon atoms, more preferably from 2 to 8 carbon atoms, still more preferably 2 to 6 carbon atoms, yet more preferably 2 to 4 carbon atoms. Examples of alkenyl groups include vinyl, allyl, isopropenyl, pentenyl, hexenyl, heptenyl, cyclopropenyl, cyclobutenyl, cyclopentenyl, cyclohexenyl, 1-propenyl, 2-butenyl, 2-methyl-2-butenyl, isoprenyl, farnesyl, geranyl, geranylgeranyl and the like.

The term "alkynyl", as used herein, relates to hydrocarbon radicals having one or several triple bonds, having straight, branched, polycyclic or cyclic moieties or combinations thereof and having from 2 to 18 carbon atoms, preferably 2 to 10 carbon atoms, more preferably from 2 to 8 carbon atoms, still more preferably from 2 to 6 carbon atoms, yet more preferably 2 to 4 carbon atoms. Examples of alkynyl radicals include ethynyl, propynyl, (propargyl), butynyl, pentynyl, hexynyl and the like.

The term "aryl" as used herein, relates to an organic radical derived from an aromatic hydrocarbon by removal of one hydrogen, and includes any monocyclic, bicyclic or polycyclic carbon ring of up to 7 members in each ring, wherein at least one ring is aromatic. Said radical may be optionally substituted with one or more substituents independently selected from alkyl, alkoxy, halogen, hydroxyl or amino radicals. Examples of aryl include phenyl, p-tolyl, 4-methoxyphenyl, 4-(tert-butoxy)phenyl, 3-methyl-4-methoxyphenyl, 4-fluorophenyl, 4-chlorophenyl, 3-nitrophenyl, 3-aminophenyl, 3-acetamidophenyl, 4-acetamidophenyl, 2-methyl-3-acetamidophenyl, 2-methyl-3-aminophenyl, 3-methyl-4-aminophenyl, 2-amino-3-methylphenyl, 2,4-dimethyl-3-aminophenyl, 4-hydroxyphenyl, 3-methyl-4-hydroxyphenyl, 1-naphthyl, 2-naphthyl, 3-amino-1-naphthyl, 2-methyl-3-amino-1-naphthyl, 6-amino-2-naphthyl, 4,6-dimethoxy-2-naphthyl, tetrahydronaphthyl, indanyl, biphenyl, phenanthryl, anthryl or acenaphthyl and the like.

The term "aralkyl" as used herein, relates to a group of the formula alkyl-aryl, in which alkyl and aryl have the same meaning as defined above. Examples of aralkyl radicals include benzyl, phenethyl, dibenzylmethyl, methylphenylmethyl, 3- (2-naphthyl)-butyl, and the like. Examples of the carboxyl radical part of formula (II) may include but are not limited to formyl, acetyl, propionyl, butyryl.

Examples of the organosilylated carboxylate compounds of general formula (II) include but are not limited to trimethylsilylformiate, tri-n-butyl 1-acetoxy-silane, tri-n-propyl-1-acetoxy silane, tri-t-butyl-1-acetoxy-silane, tri-isopropyl-1-acetoxy-silane, tri-isobutyl-1-acetoxysilane, tri-methyl-1-acetoxy-silane, triethyl- 1-acetoxy-silane, tribenzyl-1-acetoxy-silane, triamyl- 1-acetoxy-silane, triphenyl- 1-acetoxy-silane, trimethylsilylpropionate, t-butyldimethylsilylacetate, pentamethyl-1-acetoxy-disiloxane, heptamethyl-1-acetoxytrisiloxane, nonamethyl-1-acetoxy-tetrasiloxane, nonaethyl-1-acetoxy-tetrasiloxane, nona-t-butyl-1-acetoxytetrasiloxane, nonabenzyl-1-acetoxy-tetrasiloxane, nonaisopropyl-1-acetoxy-tetrasiloxane, nona-n-propyl-1-acetoxy-tetrasiloxane, nona-isobutyl-1-acetoxytetrasiloxane, nona-amyl-1-acetoxy-tetrasiloxane, nona-n-butyl-1-acetoxy-tetrasiloxane, nona-dodecyl-1-acetoxytetrasiloxane, nona-hexyl-1-acetoxy-tetrasiloxane, nonaphenyl-1-acetoxy-tetrasiloxane, nona-octyl-1-acetoxytetrasiloxane, undecamethyl-1-acetoxy-pentasiloxane, undecaethyl-1-acetoxy-pentasiloxane, undeca-t-butyl-1-acetoxy-pentasiloxane, undecabenzyl-1-acetoxypentasiloxane, undeca-isopropyl-1-acetoxy-pentasiloxane, undeca-n-propyl-1-acetoxy-pentasiloxane, undeca-isobutyl-1-acetoxy-pentasiloxane, undeca-amyl-1-acetoxypentasiloxane, undeca-n-butyl-1-acetoxy-pentasiloxane, undeca-dodecyl-1-acetoxy-pentasiloxane, undeca-hexyl-1-acetoxy-pentasiloxane, undeca-phenyl-1-acetoxypentasiloxane, undeca-octyl-1-acetoxy-pentasiloxane tridecamethyl-1-acetoxy-hexasiloxane, tridecaethyl-1-acetoxy-hexasiloxane, trideca-t-butyl-1-acetoxyhexasiloxane, tridecabenzyl-1-acetoxy-hexasiloxane, trideca-isopropyl-1-acetoxy-hexasiloxane, trideca-n-propyl-1-acetoxy-hexasiloxane, trideca-isobutyl-1-acetoxyhexasiloxane, trideca-amyl-1-acetoxy-hexasiloxane, trideca-n-butyl-1-acetoxy-hexasiloxane, trideca-dodecyl-1-acetoxy-hexasiloxane, trideca-hexyl-1-acetoxyhexasiloxane, trideca-phenyl-1-acetoxy-hexasiloxane, trideca-octyl-1-acetoxy-hexasiloxane,

| Acyloxysilane | CAS registry number |
|---|---|
| Trimethyl formiate | 18243-21-5 |
| Trimethyl acetate | 2754-27-0 |
| Triethylsilyl acetate | 5290-29-9 |
| Trimethylsilyl trifluoroacetate | 400-53-3 |
| Tri-n-propylsilyl acetate | 17315-26-3 |
| Tri-n-butylsilyl acetate | 22192-48-9 |
| Trimethylsilyl propionate | 16844-98-7 |
| Trimethylsilyl trichloroacetate | 25436-07-1 |

Typical examples of the carboxyl part of formula (II) are acetyl, propionyl and butyryl.
$R^6$ may be a partially or totally hydrogenated alkyl, aralkyl or aryl radical.

For instance, the acyloxysilanes may be partially or totally hydrogenated carboxylate compounds as defined above. Typically, the halogenated carboxylates are fluorinated or chlorinated.

Examples of such compounds include: trimethylsilytrifluoroacetate and trimethylsilytrichloroacetate.

The process of the invention enables the production of the organosilylated carboxylate polymers with exactly the desired number of the hydrocarbylsilyl protecting units.

According to one preferred embodiment, the organosilylated carboxylate polymers obtained by the process of the invention have a number of dihydrocarbylsiloxane units (n) equal to 0.

According to another preferred embodiment, the organosilylated carboxylates obtained by the process of the invention have a number of dihydrocarbylsiloxane units (n) from 1 to 200, preferably from 1 to 19, more preferably from 1 to 4.

The reaction progress may be monitored by any suitable analytical method as well as with the determination of the amount of acid distilled.

The advantage of this invention is that the process uses reactants, which can be easily handled. Another advantage lies in the simplicity and safety of the procedure (no filtration of salt or trapping of corrosive gaseous matter). Furthermore, another advantage is that the reaction may take place without any added catalyst and can be performed under reduced pressure. A further advantage is that the formed carboxylic acid may be removed, preferably, under distillation, preferably, azeotropic distillation. Due to its shortness, its easy work-up procedure and its high yield the process of the present invention can be considered as a substantial improvement over the existing methods described above.

The claimed synthesis route can be carried out at high temperatures and is therefore quick and efficient. The claimed route can be used for the synthesis of hydrolysable trialkylsilyl ester bearing polymers which can be used as resins for tin-free self polishing antifouling paints without having recourse to use of the expensive and difficult to prepare trialkylsilyl(meth)acrylate monomers.

The organosilylated carboxylate polymers obtained by the process of the invention can be derived from homo or copolymers (including terpolymers, etc) having carboxylic acid groups in the side chains or terminal groups, such as acrylic resins (containing unsaturated polymerizable organic acid monomers such as acrylic, methacrylic, itaconic, maleic, fumaric, crotonic ,sulfonic, phosphonic acids and the like, optionally copolymerised with one or more other "neutral" monomers including alkacrylic esters, vinyl esters (e.g., vinyl acetate, vinyl propionate, vinyl butyrate, vinyl benzoate, vinyl pyrrolidone, etc), styrene, vinyltoluene, alpha -methylstyrene), acid-functional polyester or alkyd resins, acid-modified epoxy resins, etc.

More generally, the polymers of the present invention may be derived from any known polymer having acid groups in the side chains or the terminal groups

The polymers and copolymers of said monomers are useful in coating or paint composition. More preferably they are used as binders in antifouling coating compositions. When used in an antifouling coating composition, they give a film which undergoes neither cracking nor peeling and shows moderate hydrolysability to dissolve into seawater constantly at an adequate rate and which therefore exhibits excellent antifouling property for long term.

The antifouling coating compositions prepared using the polymers obtained by the process of the invention are tin-free coatings and provide an alternative to the present self-polishing coating technology based on hydrolysable tributyl tin polymers (the use of which is due to be banned in antifouling paints by 2003). The organosilylated carboxylate

polymers provided by the process of the invention compared to organotin compounds are less toxic, less polar, more hydrophobic and more stable.

There is no limit on the molecular weight (Mw) of the final product. However, in the case of use as a binder for antifouling paints, the polymer should have a sufficient Mw to be film-forming.

The invention will now be described by way of illustration only and with reference to the accompanying examples.

Examples:

Determination of the solids content

The solids content was determined by weighting before and after heating a sample for 1 hour at 120°C [standard test methods ISO 3233/ASTM 2697/DIN 53219]. (%)

Determination of the viscosity

The viscosity of binder solutions and of paints was determined with a Brookfield at 25°C [ASTM test method D2196-86]. (dPa.s)

Determination of the molecular weight distribution of the polymers

The molecular weight distribution was determined by gel permeation chromatography (GPC) with tetrahydrofurane (THF) as solvent and polystyrene as reference.

Example 1 [acid polymer]

1369 g xylene and 342 g n-butanol were put in a 5L 4-necked flask and kept under nitrogen. The four necks of the flask were equipped with stirring means, a reflux cooler, a thermometer for temperature control of the reaction, and means for addition of the monomers.

A premix was prepared in a separate vessel; it contained:

- 182 g of butyl acrylate (BA) [13.0 w% of monomers]
- 952 g of ethyl acrylate (EA) [68.0 w% of monomers]
- 266 g of acrylic acid (AA) [19.0 w% of monomers]
- 42 g (= 3% on total monomer weight) of VAZO 67

The premix was added drop by drop to the reaction vessel (total time: about 4 hours) whilst maintaining the temperature at 100°C. The temperature was increased up to 110°C after completion of the addition. Thirty minutes after the end of the addition of the premix, one post-addition of 7 g (0.5 w%) VAZO67 in a 80g xylene/20 g n-butanol mixture had been made. After 1 hour the binder had been cooled and thinned down with 160 g xylene and 40 g n-butanol. The binder had a viscosity of 0.3 dPa.s, a solids of 41.1 % and a Mw of 9066 D (Mw/Mn= 2.1) Measured acid value: 51.4 mg KOH/g.

Example 2 (acid polymer):

1173 g xylene and 293 g butanol were put in a 4 L 4-necked flask and kept under nitrogen. The four necks of the flask were equipped with stirring means, a reflux cooler, a thermometer for temperature control of the reaction, and means for addition of the monomers. A premix was prepared in a separate vessel; it contained:

- 167 g of butyl acrylate (BA) [13.9 w% of monomers]
- 832 g of methyl methacrylate (MMA) [69.3 w% of monomers]
- 202 g of methacrylic acid (MAc) [16.8 w% of monomers]
- 36 g (= 3% on total monomer weight) of VAZO 67

The premix was added drop by drop to the reaction vessel (total time: about 4 hours) whilst maintaining the temperature at 100°C. Forty-five minutes after the end of the addition of the premix, three post-addition of 2.4 g (0.2 w%) VAZO67 with 45 minutes interval had been made. Here after the temperature was increased up to 110°C for 1 hour to complete the reaction. The solution had been thinned down with 266 g xylene and 67 g butanol. The binder had a solid content of 41.8 % and a viscosity of 11 dPa.s. The measured acid value is 44.0 mg KOH/g

Example 3 (acid polymer)

1320 g xylene and 180 g acetic acid were put in a 4 L 4-necked flask and kept under nitrogen. The four necks of the flask were equipped with stirring means, a reflux cooler, a thermometer for temperature control of the reaction, and means for addition of the monomers. A premix was prepared in a separate vessel; it contained:

- 167 g of butyl acrylate (BA) [13.9 w% of monomers]
- 832 g of methyl methacrylate (MMA) [69.3 w% of monomers]
- 202 g of methacrylic acid (MAc) [16.8 w% of monomers]
- 36 g (= 3% on total monomer weight) of VAZO 67

The premix was added drop by drop to the reaction vessel (total time: about 4 hours) whilst maintaining the temperature at 100°C. Forty-five minutes after the end of the addition of the premix, three post-addition of 2.4 g (0.2 w%) VAZO67 with 45 minutes interval had been made. Here after the temperature was increased up to 110°C for 1 hour to complete the reaction. The solution had been thinned down with 300 g xylene. The binder had a solid content of 43 % and a viscosity of 89 dPa.s This polymer solution contains 76.9 mequiv. methacrylic acid/100g.

Example 4 (post-derivatisation of acid polymer of example 1)

257 grams of the binder of example 1 and 150 ml xylene had been put into a 1 L flask equipped with a stirrer and a cooler for distillation. All the n-butanol (30 g) had been distilled by heating up to 142 °C. Then the binder had been cooled down to 80 °C and 26.5 g of acetoxy trimethylsilane (CAS RN 2754-27-0) and 250 ml of cyclohexane had been added. The acetic acid had been distilled of by an azeotrope with cyclohexane at temperatures between 90-103 °C. After re-addition of 250 ml cyclohexane and continuation of the distillation the final yield for acetic acid was determined at 93 % and the solids of the remaining, now silylated binder, 61.4 %.

Example 5 (postderivatization of Example 3 with TBSiAcetate)

504 g of the acid polymer described in ex. 3, 105g tributylsilylacetate (CAS RN 22192-48-9) and 220 mL xylene had been put into a 1- L 4-necked flask and kept under nitrogen. The four necks of the flask were equipped with stirring means, a thermometer for temperature control, a distillation column with cooler and receiver. The reaction mixture was incompatible when cold but not at temperatures above 75 °C. The mixture had been heated slowly to 136-150°C. The yield was 56% on acetic acid after distilling 220 ml. Three re-additions of 200 ml xylene and continuation of the distillation raised the yield to 94.5 % (converted TBSiAc). The final resin had a viscosity of 6 dPa.s, a Mw of 17 kD (Mw/Mn= 2.0) and a solids of 53.3 %. A drawdown made of the polymer solution on glass yielded a clear dry film. The binder film got a light haze upon 1 day immersion in water. The binder eroded in 2 hours at pH 12.7 in a similar manner as a binder produced from the TBSiMA monomer.

Example 6 post-derivatization of ex 2 with TBSiAcetate

448 g of the acid polymer described in ex. 2, 93.4 g tributylsilylacetate and 62 mL xylene had been put into a 1- L 4-necked flask and kept under nitrogen. The four necks of the flask were equipped with stirring means, a thermometer for temperature control, a distillation column with cooler and receiver. The reaction mixture was incompatible until just before the end of the distillation. The mixture had been heated slowly to 136-152°C. The yield was 88 % on acetic acid after distilling 273 ml. One re-addition of 200 ml xylene and continuation of the distillation raised the yield to 92.5 % (converted TBSiAc). The final resin had a viscosity of 91 dPa.s and a solids of 58.1 %. A drawdown made of the polymer solution on glass yielded a clear dry film The binder film got a light haze upon 1 day immersion in water. The binder eroded in circa 3 hours at pH 12.7 in a similar manner as a binder produced from the TBSiMA monomer.

Example 7 Postderivatization of example 2 with MTDMS-acetate

302 g of the acid polymer described in ex. 2 , 73 g MTDMS-acetate (CAS n° = 3453-81-4 )and 205 mL xylene had been put into a 1- L 4-necked flask and kept under nitrogen. The four necks of the flask were equipped with stirring means, a thermometer for temperature control, a distillation column with cooler and receiver. The mixture had been heated slowly to 136-150 °C. The yield was 78 % on acetic acid after distilling 318 g. The final resin had a viscosity of 19 dPa.s and a solids of 56 %. A drawdown made of the polymer solution on glass yielded a clear dry film. The binder film turned haze and cheesy upon 1 day immersion in water. The binder eroded in 1 hour at pH 12.3.
Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

**1.** A process for the protection of acid group containing side chains and/or terminal acid groups on polymers by reaction of at least one polymer acid group of formula (I)

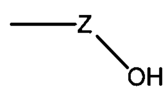 (I)

wherein z represent

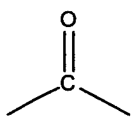 , 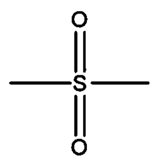 , 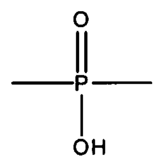 or 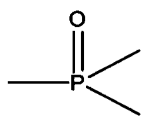 ;

with a monoacyloxysilyl compound of formula (II)

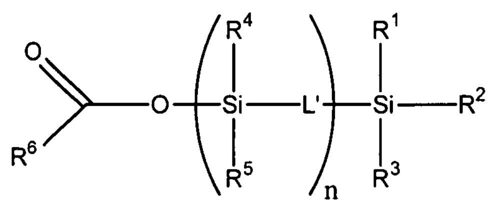 (II)

wherein $R^1$, $R^2$, $R^3$, $R^4$, $R^5$ each independently represent hydrogen, hydroxyl, alkyl, alkenyl, alkynyl, aryl or aralkyl radical optionally substituted, in the case of the hydrocarbyl radicals, by one or more substituents independently selected from the group comprising alkyl, alkoxyl, aralkyl, aralkyloxyl, aryl, aryloxyl, hydroxyl, halogen, amino or amino alkyl radicals; $R^4$ and $R^5$ may also independently represent -L' - $(SiR^4R^5L')_n$-$SiR^1R^2R^3$, wherein $R^1$, $R^2$, $R^3$, $R^4$ and $R^5$ are as defined above;

L' represents O, S, or $NR^7$, where $R^7$ is defined as $R^6$ below;

n represents a number of dihydrocarbylsiloxane units from 0 to 1000; and $R^6$ is an hydrogen atom, an alkyl, aralkyl

or aryl, alkenyl or alkynyl group optionally substituted, in the case of the hydrocarbyl radicals, with one or more substituents selected from the equivalent substituents as detailed for $R^1$-$R^5$ above;
while removing the formed acid group of formula (IV)

$$R^6C(O)OH$$

from the system to produce at least one protected acid group of formula (III)

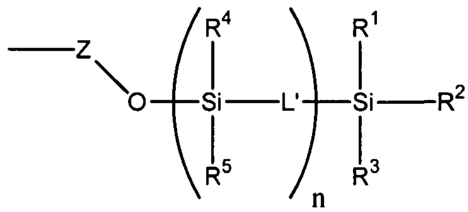

(III)

wherein Z, $R^1$, $R^2$, $R^3$, $R^4$, $R^5$, L' and n are defined above.

**2.** A process according to claim 1, wherein the polymer, $P^1$, is a polymer having the indicated acid containing side chain or terminal group, preferably a plurality of such side chains branching at intervals along the length thereof and/or terminating the polymer chain.

**3.** A process according to claim 2, wherein $P^1$ is a polymer having more than 30 carbons in the polymer chain.

**4.** A process according to any preceding claim, wherein the reaction is carried out in a suitable solvent.

**5.** A process according to any preceding claim, wherein the solvents are those which allow reactive distillation.

**6.** A process according to any preceding claim, wherein the solvents are those which form a low boiling azeotrope with distilled $R^6$-C(O)OH.

**7.** A process according to any preceding claim, wherein the reaction is carried out in the range 0°C - 200°C.

**8.** A process according to any preceding claim, wherein $R^1$, $R^2$, $R^3$, $R^4$, $R^5$ and $R^6$ each independently represent a hydrogen atom, an alkyl or an aryl group.

**9.** A process according to any preceding claim, wherein n as used herein each independently represent 0 to 500.

**10.** A process according to any preceding claim, wherein examples of the carboxyl radical part of formula (II) may include but are not limited to formyl, acetyl, propionyl, butyryl, pivaloyl, oxaloyl, malonyl, succinyl, glutaryl, adipoyl, benzoyl, phthaloyl, isobutyroyl, sec-butyroyl, octanoyl, isooctanoyl, nonanoyl, isononanoyl, abietyl, dehydroabietyl, dihydroabietyl, naphtenyl, anthracenyl, abietyl dimer (Dymerex®), dihydroabietyl (Foral®) and the like.

**11.** A process according to, examples of the organosilylated carboxylate compounds of general formula (II) include but are not limited to trimethylsilylformiate, tri-n-butyl 1-acetoxy-silane, tri-n-propyl-1-acetoxy silane, tri-t-butyl-1-acetoxy-silane, tri-isopropyl-1-acetoxy-silane, tri-isobutyl-1-acetoxysilane, tri-methyl-1-acetoxy-silane, triethyl-1-acetoxy-silane, tribenzyl- 1-acetoxy-silane, triamyl- 1-acetoxy-silane, triphenyl- 1-acetoxy-silane, trimethylsilylpropionate, t-butyldimethylsilylacetate, pentamethyl-1-acetoxy-disiloxane, heptamethyl-1-acetoxytrisiloxane, nonamethyl-1-acetoxy-tetrasiloxane, nonaethyl-1-acetoxy-tetrasiloxane, nona-t-butyl-1-acetoxytetrasiloxane, nonabenzyl-1-acetoxy-tetrasiloxane, nonaisopropyl-1-acetoxy-tetrasiloxane, nona-n-propyl-1-acetoxy-tetrasiloxane, nona-isobutyl-1-acetoxytetrasiloxane, nona-amyl-1-acetoxy-tetrasiloxane, nona-n-butyl-1-acetoxy-tetrasiloxane, nona-dodecyl-1-acetoxytetrasiloxane, nona-hexyl-1-acetoxy-tetrasiloxane, nonaphenyl-1-acetoxy-tetrasiloxane, nona-octyl-1-acetoxytetrasiloxane, undecamethyl-1-acetoxy-pentasiloxane, undecaethyl-1-acetoxy-pentasiloxane, undeca-t-butyl-1-acetoxy-pentasiloxane, undecabenzyl-1-acetoxypentasiloxane, undeca-isopropyl-1-acetoxy-pentasiloxane, undeca-n-propyl-1-acetoxy-pentasiloxane, undeca-isobutyl-1-acetoxy-pentasiloxane, undeca-amyl-1-acetoxypentasiloxane, undeca-n-butyl-1-acetoxy-pentasiloxane, undeca-dodecyl-1-acetoxy-pentasiloxane, undeca-hexyl-1-acetoxy-pentasiloxane, undeca-phenyl-1-acetoxypentasiloxane, undeca-octyl-1-acetoxy-pentasiloxane tridecamethyl-1-acetoxy-hexasiloxane, tridecaethyl-1-acetoxy-hexasiloxane, trideca-t-butyl-1-acetoxyhexasiloxane, tridecabenzyl-1-acetoxy-hexasiloxane, trideca-isopropyl-1-acetoxy-hexasiloxane, trideca-n-propyl-1-acetoxy-hexasiloxane, trideca-isobutyl-1-acetoxyhexasiloxane, trideca-amyl-1-acetoxy-hexasiloxane, trideca-n-butyl-1-acetoxy-hexasiloxane, trideca-dodecyl-1-acetoxy-hexasiloxane, trideca-hexyl-1-acetoxyhexasiloxane, trideca-phenyl-1-acetoxy-hexasiloxane, trideca-octyl-1-acetoxy-hexasiloxane.

**12.** A process according to any preceding claim, wherein the acyloxysilanes may be partially or totally halogenated carboxylate compounds as defined above.

**13.** A process according to any preceding claim, wherein the organosilylated carboxylate polymers obtained by the process of the invention have a number of dihydrocarbylsiloxane units (n) equal to 0.

**14.** A process according to any of claims 1-12, wherein the organosilylated carboxylates obtained by the process of the invention have a number of dihydrocarbylsiloxane units (n) from 1 to 200.

**15.** A process according to any of claims 1-14 which includes the additional step of incorporating the polymer in a film or coating composition.

**16.** A film or coating comprising a polymer as produced by a process as defined in any of claims 1 - 14.

**17.** An antifouling paint composition comprising a polymer produced by a process in accordance with any of claims 1-14.

European Patent Office

# EUROPEAN SEARCH REPORT

Application Number
EP 03 25 1912

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 96 03465 A (COURTAULDS COATINGS HOLDINGS ;FINNIE ALISTAIR ANDREW (GB); LENNEY) 8 February 1996 (1996-02-08)<br>* page 13, line 29 - page 14, line 7; claim 6 *<br>--- | 1-17 | C08J3/00<br>C08F8/14<br>C09D5/16 |
| A | WO 98 08382 A (LILLY CO ELI)<br>5 March 1998 (1998-03-05)<br>* page 16, line 1 - line 15 *<br>* page 54, line 5 - page 55, line 20 *<br>----- | 1 | |

| TECHNICAL FIELDS SEARCHED (Int.Cl.7) |
|---|
| C08J |
| C08F |
| C09D |
| C09J |
| C08G |

The present search report has been drawn up for all claims

| Place of search | Date of completion of the search | Examiner |
|---|---|---|
| MUNICH | 7 August 2003 | olde Scheper, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 03 25 1912

This annex lists the patent family members relating to the patent documents cited in the above-mentioned European search report.
The members are as contained in the European Patent Office EDP file on
The European Patent Office is in no way liable for these particulars which are merely given for the purpose of information.

07-08-2003

| Patent document cited in search report | Publication date | Patent family member(s) | Publication date |
|---|---|---|---|
| WO 9603465 A | 08-02-1996 | AU 3083995 A | 22-02-1996 |
| | | WO 9603465 A1 | 08-02-1996 |
| WO 9808382 A | 05-03-1998 | AU 4163197 A | 19-03-1998 |
| | | EP 0923287 A1 | 23-06-1999 |
| | | JP 2000516961 T | 19-12-2000 |
| | | WO 9808382 A1 | 05-03-1998 |

EPO FORM P0459

For more details about this annex : see Official Journal of the European Patent Office, No. 12/82